# EUROPÄISCHE PATENTSCHRIFT

(11) **EP 3 391 791 B1**
(45) Veröffentlichungstag und Bekanntmachung des Hinweises auf die Patenterteilung: **20.11.2019**
(21) Anmeldenummer: 18167188.4
(22) Anmeldetag: 13.04.2018
(51) Int. Cl.: A47J 31/40, A47J 31/56, A47J 43/28, A47G 21/00

(54) **MESSGEFÄSS FÜR EINEN GETRÄNKEAUTOMATEN, GETRÄNKEAUTOMAT UND VERFAHREN**
BEVERAGE MACHINE, METHOD AND MEASURING VESSEL FOR A BEVERAGE MACHINE
RÉCIPIENT DE MESURE POUR UN DISTRIBUTEUR DE BOISSONS AUTOMATIQUE, DISTRIBUTEUR DE BOISSONS AUTOMATIQUE ET PROCÉDÉ

(30) Priorität: 19.04.2017 DE 102017108321
(43) Veröffentlichungstag der Anmeldung: 24.10.2018
(73) Patentinhaber: Vorwerk & Co. Interholding GmbH, 42275 Wuppertal (DE)
(72) Erfinder: Hahn, Pia, 58332 Schwelm (DE); Bapat, Aniket, 40882 Ratingen (DE); Tamm, Steffen, 40219 Düsseldorf (DE); Groom, Sascha, 48607 Ochtrup (DE); Zils, Jürgen, 51399 Burscheid (DE)
(74) Vertreter: Cohausz & Florack

(56) Entgegenhaltungen:
- WO-A1-2010/070645
- WO-A1-2014/195351
- WO-A1-2015/062272
- US-A1- 2015 325 142

## Beschreibung

Die Erfindung betrifft ein Messgefäß für einen Getränkeautomaten mit einem Messvolumen zur Aufnahme eines Messgutes und mit mindestens einem Waagemodul, wobei das Messgut als Zutat für die Zubereitung eines Getränks vorgesehen ist, wobei mindestens ein mit dem Waagemodul verbundenes Kommunikationsmodul zum Erfassen mindestens einer Wägeinformation vorgesehen ist und wobei das Kommunikationsmodul für eine Übertragung der mindestens einen Wägeinformation an den Getränkeautomaten ausgebildet ist. Weiterhin betrifft die Erfindung einen Getränkeautomaten mit mindestens einer Einrichtung zur Zubereitung eines Getränks und mit mindestens einem Kommunikationsmodul zur Verbindung mit mindestens einem Messgefäß. Weiterhin betrifft die Erfindung ein Verfahren zur Einstellung von Zubereitungsparametern eines Getränkeautomaten in Abhängigkeit von mindestens einer erfassten Information.

Gefäße, mit denen die Zutaten für die Zubereitung eines Getränks dosiert werden können, sind häufig als Löffel oder Dosierlöffel bekannt. Solche Gefäße weisen oft eine sichtbare Markierung innerhalb oder außerhalb des Messvolumens auf, die einem bestimmten Volumen entspricht. Da die Korrelation zwischen Menge und Gewicht bzw. Gewicht und Volumen von dem Zustand (flüssig oder fest, als Pulver oder Brocken, verdünnt oder rein) und von den Eigenschaften (zum Beispiel Dichte) des Stoffes abhängig ist, ist ein solches Messgefäß oft nur für die Dosierung eines bestimmten Stoffes geeignet. Zwar weisen manche Messbecher mehrere Markierungen und Skalen auf, die für verschiedene Stoffen geeignet sind, aber die Anwendungsmöglichkeiten bleiben begrenzt.

Weiterhin sind Getränkeautomaten bekannt, die die maschinelle Zubereitung von Getränken ermöglichen. Der Nutzer muss dabei eine Auswahl eingeben, um sich das gewünschte Getränk ausgeben zu lassen. Wenn die Zubereitung des gewünschten Getränks Zubereitungsparameter erfordert, die nicht zu einem vorprogrammierten Zubereitungsparametersatz gehört, wird die Eingabe der benötigten Zubereitungsparameter aufwändig und erweist sich oft als fehlerträchtig. Dies betrifft auch die Eingabe von Messgut an dem Getränkeautomaten, wenn der Nutzer an der Dosierung von Zutaten für die Zubereitung des Getränks beteiligt ist.

Weiterhin sind die Zubereitungsparameter sowohl von den Vorlieben und Gewohnheiten des Nutzers als auch von den Eigenschaften und der Menge der Zutaten abhängig. Da weder die Vorlieben der Nutzer noch die realen Zutaten erfasst und berücksichtigt werden, ist die Zufriedenheit des Nutzers beeinträchtigt.

Aus der WO 2015/062272 A1 ist einen Getränkeautomaten bekannt, der zum Empfang von aus Herstellern, Lieferanten oder Verkäufern stammenden Informationen über Kaffeebohnen und zur Kommunikation mit einer Tasse eingerichtet ist. Dabei weist die Tasse einen Temperatursensor, einen Drucksensor und einem Füllsensor auf und ist dazu eingerichtet, eine Nutzeridentität zu speichern.

Der Erfindung liegt demnach die Aufgabe zugrunde, die Nutzervorlieben und die Eigenschaften der Zutaten zu berücksichtigen und die Dosierung der Zutaten für die Zubereitung von Getränken einfacher und zuverlässiger zu gestalten.

Zur Lösung der Aufgabe gibt die vorliegende Erfindung ein eingangs erwähntes Messgefäß für einen Getränkeautomaten an, das dadurch gekennzeichnet ist, dass mindestens eine Identifizierungseinheit für eine Identifizierung eines Nutzers des Messgefäßes vorgesehen ist.

Die Ausgestaltung des Messgefäßes mit einem Waagemodul ermöglicht die Erfassung des Gewichts des Inhaltes im Messvolumen. Dadurch können Zutaten für die Zubereitung von Getränken oder anderen warmen flüssigen Speisen dosiert werden, wie es zum Beispiel für Tee, Kaffee, Kakao oder vorgefertigte Suppenzubereitungen erforderlich ist. Das beschriebene Messgefäß ermöglicht die Dosierung von Zutaten, die nicht direkt in einem Getränkeautomaten gelagert werden, sondern vor der Zubereitung dem Getränkeautomaten zugeführt werden müssen. Es betrifft insbesondere Teeblätter oder Kaffeebohnen, die für die Konservierung der Aromen in geschlossenen Behältern aufbewahrt werden.

Dadurch ist weniger Lagerplatz in dem Getränkeautomaten erforderlich, da die Zutaten nicht zwangsläufig in dem Getränkeautomaten gelagert werden müssen, um eingesetzt zu werden.

Das Messgefäß kann als Löffel, Tasse, Kanne oder ähnliches ausgebildet sein, so dass mindestens eine Vertiefung von dem Messgefäß als Messvolumen verwendet werden kann. Das Waagemodul kann in der Vertiefung und/oder an der Schnittstelle zwischen dem Messvolumen und einem Griff des Messgefäßes positioniert sein. Die Menge von in dem Messvolumen positionierten Zutaten weist ein Gewicht auf, das die Verformung oder Durchbiegung des Waagemoduls bewirkt. Das Waagemodul ist dazu eingerichtet, ein Messsignal entsprechend der erfahrenen Verformung zu produzieren. Wenn das Waagemodul in dem Messvolumen platziert ist, kann die Verformung aufgrund einer Druckänderung, die dem Gewicht der Zutaten entspricht, erfolgen. Wenn das Waagemodul sich an der Schnittstelle zwischen dem Messvolumen und dem Griff befindet, kann das Messsignal folglich einer Durchbiegung, die dem Gewicht der Zutaten in dem Messvolumen entspricht, produziert werden. Das von dem Waagemodul produzierte Messsignal wird als Wägeinformation bezeichnet.

Die Übermittelung von mindestens einer Wägeinformation über eine vorzugsweise kabellose Verbindung zwischen dem Messgefäß und dem Getränkeautomaten gestattet die Ausgestaltung des Messgefäßes als wasserdichten Gegenstand, da Kabelanschlüsse nicht erforderlich sind. So kann das Messgefäß spülmaschinenfest hergestellt sein, wodurch hygienischere Bedienungsbedingungen des Messgefäßes ermöglicht werden. Das Messgefäß kann auch für verschiedene Getränkeautomaten eingesetzt werden, da kein spezifischer Kabelanschluss für die Kommunikation mit dem Getränkeautomaten erforderlich ist.

Vorzugsweise ermöglicht das mindestens eine Kommunikationsmodul eine bidirektionale Kommunikation mit dem Getränkeautomaten. In dieser Weise können Informationen bzw. Wägeinformationen sowohl von dem Messgefäß zu dem Getränkeautomaten als auch von dem Getränkeautomaten zu dem Messgefäß gesendet und empfangen werden. So können zum Beispiel Informationen über das Gewicht, das mit dem Waagemodul zu messen ist, von dem Getränkeautomaten zu dem Messgefäß kommuniziert werden und anschließend das Messgut von dem Messgerät in den Getränkeautomaten eingefüllt werden.

Mindestens eine Identifizierungseinheit für eine Identifizierung eines Nutzers des Messgefäßes ist vorgesehen. Die Identifizierung des Nutzers schafft eine Voraussetzung für eine Anpassung der Zubereitungsparameter an die Nutzervorlieben, denn Informationen wie Zubereitungsparameter entsprechend der Identität des Nutzers können dank des Kommunikationsmoduls auf den Getränkeautomaten übertragen werden. Die Identifizierungseinheit kann als Fingerabdrucksensor ausgebildet sein.

Vorzugsweise ist mindestens ein Informationsträger vorgesehen und der mindestens eine Informationsträger weist mindestens eine Wägeinformation und/oder eine Information über mindestens einen Zubereitungsparameter auf. Dadurch kann das von dem Waagemodul gemessene Gewicht und/oder ein Zubereitungsparameter entsprechend der Identität des Nutzers mittels des Informationsträgers gespeichert werden. Mehrere Sätze von Zubereitungsparametern, die den Vorlieben von verschiedenen Nutzern entsprechen, können gleichzeitig auf dem Informationsträger gespeichert sein. Dadurch kann die Zubereitung von Getränken an die Vorlieben von mehreren Nutzern angepasst werden.

In einer weiteren Ausgestaltung kann eine Erkennungseinheit für ein Erkennen des Inhalts des Messvolumens vorgesehen sein. Dadurch kann auf eine Eingabe am Getränkeautomaten ganz verzichtet werden, da das Messgefäß dank der Erkennungseinheit in der Lage ist, eine Tee-, Kaffee-, Kakao- oder Suppensorte selbständig zu erkennen. Dadurch können das zu messende Gewicht und die entsprechenden Zubereitungsparameter an den erkannten Inhalt des Messvolumens angepasst werden. Die Zubereitungsparameter können beispielsweise eine Ziehzeit, eine Flüssigkeitsmenge, eine Temperatur oder ein Gewicht beinhalten.

Vorzugsweise sind die mindestens eine Identifizierungseinheit und/oder die mindestens eine Erkennungseinheit mit dem mindestens einen Informationsträger und/oder mit dem mindestens einen Kommunikationsmodul verbunden, wobei innerhalb des Messgefäßes eine drahtgebundene Verbindung bevorzugt ist.

Gegebenenfalls können die Zubereitungsparameter von dem Informationsträger und/oder von dem Getränkeautomaten aufgerufen werden. Wenn die Identifizierungseinheit mit dem Informationsträger verbunden ist, können Zubereitungsparameter der erkannten Identität zugeordnet werden, ohne dass eine Übertragung von Informationen zwischen dem Messgefäß und dem Getränkeautomaten stattfinden muss. So kann das Messgefäß unabhängig von einem Getränkeautomaten benutzt werden.

Weiterhin können Zubereitungsparameter einem erkannten Inhalt des Messgefäßes zugeordnet werden, wenn die Erkennungseinheit mit dem Informationsträger verbunden ist. Die Verbindung von der Identifizierungseinheit und/oder von der Erkennungseinheit mit dem Kommunikationsmodul ermöglicht die Übertragung der erfassten Identität und/oder der Information über den erkannten Inhalt zu dem Getränkeautomaten.

In einer weiteren Ausgestaltung ist eine Anzeigeeinrichtung vorgesehen und die Anzeigeeinrichtung ist mit dem mindestens einen Informationsträger und/oder dem mindestens einen Kommunikationsmodul verbunden, wozu erneut eine kabelgebundene Verbindung bevorzugt ist. Die Verbindung zwischen der Anzeigeeinrichtung und dem Informationsträger ermöglicht den Nutzer über den Stand des von dem Waagemodul erfassten Gewichts im Vergleich zu einem vorgegebenen Gewicht zu informieren. Es können aber auch andere Informationen über die Anzeigeeinrichtung wiedergegeben werden. Wenn die Anzeigeeinrichtung mit dem Kommunikationsmodul verbunden ist und das Kommunikationsmodul für eine bidirektionale Kommunikation mit dem Getränkeautomaten vorgesehen ist, kann die Anzeigeeinrichtung auch vom Getränkeautomaten stammende Informationen wiedergegeben.

Vorzugsweise ist mindestens eine haptische Einrichtung und/oder mindestens ein akustischer Signalgeber vorgesehen und die mindestens eine haptische Einrichtung und/oder der mindestens eine Signalgeber ist mit dem Waagemodul verbunden. In dieser Weise kann das Überschreiten eines zu messenden Gewichts mittels Vibrationen und/oder akustische Signale signalisiert werden.

Die oben aufgezeigte Aufgabe wird gemäß der vorliegenden Erfindung auch durch einen Getränkeautomaten mit mindestens einer Einrichtung zur Zubereitung eines Getränks und mit mindestens einem Kommunikationsmodul zur Verbindung mit mindestens einem Messgefäß gelöst, wobei das mindestens eine Kommunikationsmodul für eine kabellose Verbindung mit dem mindestens einen Messgefäß ausgebildet ist und wobei die Einrichtung abhängig von der mindestens einen über das mindestens eine Kommunikationsmodul übertragenen Wägeinformation und einer Identität eines Nutzers einstellbar ist. In dieser Weise können im Getränkeautomaten die Zubereitungsparameter in Abhängigkeit von dem Messgefäß erfassten Wägeinformationen eingestellt und angepasst werden.

In einer weiteren Ausgestaltung ist das mindestens eine Kommunikationsmodul für eine bidirektionale Verbindung mit dem mindestens einen Messgefäß vorgesehen. Dadurch können sowohl die Zubereitungsparameter entsprechend der mindestens einen erfassten Wägeinformation eingestellt werden als auch Informationen von dem Getränkeautomaten an das Messgefäß kommuniziert werden. So kann zum Beispiel eine Gewichtseingabe entsprechend einer von dem Messgefäß erkannten Teesorte vom Getränkeautomaten an das Messgefäß übertragen werden.

Da in der Regel der Getränkeautomat größere Volumen- und Gewichtskapazitäten für das Aufnehmen eines Informationsträgers als das Messgefäß aufweist, können die Informationen von dem Getränkeautomaten gespeichert und zu dem Messgefäß kommuniziert werden. Dadurch werden zugleich die Möglichkeiten für die Speicherung einer Datenbank, in der Zubereitungsparameter gespeichert sind, erweitert und die Ausgestaltung des Messgefäßes vereinfacht.

Die oben aufgezeigte Aufgabe wird durch die vorliegende Erfindung auch durch ein Verfahren zur Einstellung von Zubereitungsparametern eines Getränkeautomaten in Abhängigkeit von mindestens einer erfassten Wägeinformationen gelöst, wobei die mindestens eine Wägeinformation über eine Verbindung mit einem Messgefäß übermittelt wird. Dadurch kann die Zubereitung von Getränken an die Eigenschaften der Zutaten und an individuelle Nutzervorlieben angepasst werden.

Vorzugsweise wird der Getränkeautomat für das Zubereiten eines Getränks auf eine Flüssigkeitsmenge entsprechend der mindestens einen Wägeinformation und/oder einer Information über mindestens einen Zubereitungsparameter eingestellt. Dadurch kann die Wasser- oder Milchmenge an das von dem Messgefäß erfasste Gewicht angepasst werden. Dies ermöglicht auch die Anpassung der auszugebenden Menge oder Stärke des Getränkes, also die Konzentration von den gewogenen Zutaten in dem Wasser oder in der Milch. Zusätzlich können auch die Vorlieben des Nutzers berücksichtigt werden, wenn zusätzlich der Nutzer identifiziert wird.

Weiterhin kann bei dem Verfahren der Getränkeautomat auf eine Temperatur und/oder eine Stärke entsprechend der mindestens einen Wägeinformation eingestellt werden. Die Informationen über die Temperatur und/oder die Stärke von dem zuzubereitenden Getränk können sowohl den gespeicherten Nutzervorlieben oder dem erkannten Inhalt des Messgefäßes entsprechen. So können Zubereitungsparameter wie die Temperatur und die Ziehzeit/Stärke aus einer Datenbank aufgerufen werden, die im Getränkeautomaten und/oder im Messgefäß gespeichert ist.

Bei dem Verfahren kann mindestens ein Nutzer mittels mindestens einer Identifizierungseinheit identifiziert werden und der Getränkeautomat auf eine Getränkesorte in Abhängigkeit mindestens eines zu dem identifizierten Nutzer zugeordneten Zubereitungsparameters eingestellt werden. In dieser Weise ist keine Angabe am Getränkeautomaten erforderlich, um eine bestimmte Getränkesorte zubereiten zu lassen. Bei jeder Identifizierung und anschließenden Zubereitung werden die Vorlieben des Nutzers für eine Getränkesorte berücksichtigt.

Die Einstellung des Getränkeautomaten auf eine Getränkesorte kann auch in Abhängigkeit von einem von dem Messgefäß erkannten Inhalt des Messvolumens erfolgen, wenn die Erkennungseinheit des Messgefäßes eine bestimmte Sorte von Teeblättern, Kaffeebohnen oder weiteren Zutaten erkennt und die Erkennungseinheit über das Kommunikationsmodul mit dem Getränkeautomaten kommunizieren kann.

Vorzugsweise wird bei dem Verfahren mindestens eine Gewichtsinformation vom Getränkeautomaten zum Messgefäß übertragen. Wenn das Messgefäß eine Anzeigeeinrichtung aufweist, kann der Nutzer damit direkt vom Messgefäß informiert werden, welches Gewicht abzuwiegen ist. Wenn das Messgefäß zusätzlich eine haptische Einrichtung und/oder einen akustischen Signalgeber aufweist, kann das Erreichen des abzumessenden Gewichts dem Nutzer angezeigt werden.

In dem Verfahren kann auch mindestens eine Gewichtsinformation vom Messgefäß zum Getränkeautomaten übertragen werden. Dadurch können Zubereitungsparameter wie die Flüssigkeitsmenge von dem Getränkeautomaten entsprechend der von dem Waagemodul erfassten Wägeinformation eingestellt werden.

Im Folgenden werden bevorzugte Ausführungsbeispiele der Erfindung anhand der beigefügten Zeichnung näher erläutert. In der Zeichnung zeigen
- Fig. 1: ein erstes Ausführungsbeispiel eines erfindungsgemäßen Messgefäßes,
- Fig. 2: ein zweites Ausführungsbeispiel eines Messgefäßes und
- Fig. 3: ein Ausführungsbeispiel eines Getränkeautomaten und eines Messgefäßes.

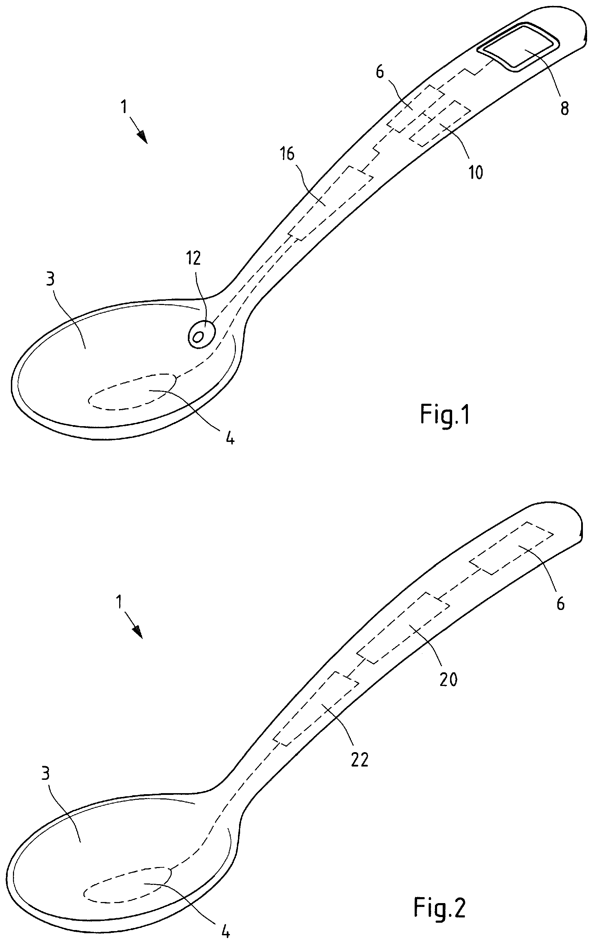

Fig. 1 zeigt ein Messgefäß 1 für einen Getränkeautomaten 2 mit einem Messvolumen 3 in Form einer Vertiefung eines Löffels zur Aufnahme eines Messgutes und mit mindestens einem Waagemodul 4. Des Weiteren ist ein mit dem Waagemodul 4 verbundenes Kommunikationsmodul 6 zum Erfassen mindestens einer Wägeinformation vorgesehen, das für eine Übertragung der mindestens einen Wägeinformation an den Getränkeautomaten 2 ausgebildet ist. Die mindestens eine übermittelte Wägeinformation ermöglicht dann eine Bestimmung mindestens eines Parameters für die Einstellung des Getränkeautomaten 2.

Das Messgefäß 1 ist in Fig. 1 als Löffel dargestellt, das Messgefäß 1 kann aber auch als Tasse oder Becher ausgebildet sein.

Das Waagemodul 4 ist in Fig. 1 in der Vertiefung des Messgefäßes 1 dargestellt. Das Waagemodul 4 kann auch an der Verbindung zwischen dem Messvolumen 3 und dem Griff oder weiteren Teilen des Messgefäßes 1 angeordnet sein.

Das Waagemodul 4 kann zur Folge einer Verformung, einer Verbiegung und/oder einer Verschiebung ein Messsignal schaffen, das von dem Gewicht des Inhaltes des Messvolumens 3 abhängig ist. Die Auswertung des Messsignals von dem Waagemodul 4 oder von einer weiteren Einrichtung ergibt das Gewicht des Inhaltes des Messvolumens 3.

Das in Fig. 1 und in Fig. 2 gezeigte Waagemodul 4 ist eine druckempfindliche Einrichtung, die bei einer Erkennung eines Druckunterschieds ein Messsignal produziert. Die Auswertung des Messsignals erfolgt in dem Waagemodul 4 oder in dem Informationsträger 10, wobei das Gewicht des Inhaltes des Messvolumens 3 bestimmt wird.

Wenn das Waagemodul 4 an der Verbindung zwischen dem Messvolumen 3 und dem Griff oder weiteren Teile des Messgefäßes 1 angeordnet ist, kann das Messsignal entsprechend einer Verbiegung oder Verformung der Verbindung produziert werden.

Die Information über das Gewicht des Inhaltes des Messvolumens 3 wird dann als Wägeinformation zu den weiteren Komponenten des Messgefäßes 1, insbesondere zu dem Kommunikationsmodul 6, weitergeleitet.

Die Verbindung zwischen dem Messgefäß 1 und dem Getränkeautomaten 2 kann mittels verschiedenen kabellosen Kommunikationstechnologien erfolgen, wie zum Beispiel WLAN ("wireless local area network"), Infrarot, Bluetooth, frequenzspezifische Schwingungen (RFID) oder ähnliches.

Die Verbindung zwischen dem Messgefäß 1 und dem Getränkeautomaten 2 kann aber auch mittels eines Kabels oder durch Einstecken erfolgen. Das Messgefäß 1 und der Getränkeautomat 2 können zum Beispiel jeweils USB (" Universal Serial Bus") Anschlüsse aufweisen, so dass Informationen wie Gewichtsinformationen und/oder Informationen über Zubereitungsparameter zwischen dem Messgefäß 1 und dem Getränkeautomaten 2 ausgetauscht werden können. Eine USB Verbindung bietet zudem den Vorteil, die Stromversorgung für die Komponente des Messgefäßes 1 zu ermöglichen.

Das in Fig. 1 dargestellte Messgefäß 1 mit dem Kommunikationsmodul 6 ermöglicht eine bidirektionale Kommunikation mit dem Getränkeautomaten 2 . In diesem Fall ist das Kommunikationsmodul 4 sowohl Sender als auch Empfänger.

Fig. 1 zeigt weiterhin mindestens eine Identifizierungseinheit 8 für eine Identifizierung eines Nutzers des Messgefäßes 1. Die Identifizierungseinheit 8 ist als Fingerabdrucksensor ausgestaltet, aber es können auch andere Sensoren eingesetzt werden.

Das Messgefäß 1 weist mindestens einen Informationsträger 10 auf, der mindestens eine Wägeinformation oder eine andere Information über mindestens einen Zubereitungsparameter aufweist. Als Zubereitungsparameter können alle Eigenschaften von Getränken zugeordnet sein, wie zum Beispiel Temperatur, Stärke, Sorte, Füllmenge, Mischverhältnis, also Konzentration oder Dosierung und Zubereitungszeit.

Weiterhin zeigt Fig. 1 eine Erkennungseinheit 12 für ein Erkennen des Inhalts des Messvolumens 3 in Form eines optischen Sensors, insbesondere eine Kamera zur Aufnahme von Bilddaten. Die Erkennungseinheit 12 kann auch als CCD ("chargedcoupled device") oder eine andere Art von Photosensoren wie CMOS-("complementary metal-oxide-semiconductor") oder Photodioden ausgebildet sein.

Mittels der Erkennungseinheit 12 kann beispielsweise eine Sorte von Teeblättern erkannt und die entsprechenden Zubereitungsparameter aufgerufen werden, so dass die Teezubereitung und Teeausgabe an die Blättersorte angepasst werden kann. Diese Ausgestaltung des Messgefäßes 1 mit einer Erkennungseinheit 12 ermöglich auch ein Erkennen von Kaffeebohnensorten oder die Differenzierung zwischen Teeblättern, Kaffeebohnen, Kakao oder trockenen Suppenpräparaten.

Die Erkennung von dem Inhalt des Messvolumens 3 ermöglicht auch die Zubereitung von Mischungen, die die Zugabe von mehreren Zutaten erfordert. Wenn zum Beispiel ein süßer Tee gewünscht ist, kann der Nutzer erst Teeblätter und dann Zucker oder umgekehrt mittels des Messgefäßes 1 wiegen, wobei die entsprechenden abzuwiegenden Gewichte zuverlässig vorgegeben werden.

Die Komponenten des Messgefäßes 1 nach Fig. 1 sind durch Kabelverbindungen verbunden (gestrichelte Linien). Diese Kabelverbindungen können zusammen oder einzeln vorhanden sein.

Eine Verbindung der Identifizierungseinheit 8 mit dem Informationsträger 10 ermöglicht das Aufrufen von Zubereitungsparametern aus einer vorgespeicherten Datenbank entsprechend der erkannten Identität. So kann jede Ausgabe von Getränken in Abhängigkeit der Vorlieben und Gewohnheiten der jeweiligen Nutzer eingestellt werden.

Weiterhin kann die durch die Identifizierungseinheit 8 erfasste Information über die Identität eines Nutzers dank einer Verbindung der Identifizierungseinheit 8 mit dem Kommunikationsmodul 6 zu dem Getränkeautomaten 2 übertragen werden. Dadurch können die entsprechenden Zubereitungsparameter aus einer in dem Getränkeautomaten 2 gespeicherten Datenbank aufgerufen werden.

Wenn die Erkennungseinheit 12 mit dem Informationsträger 10 verbunden ist, kann der erkannte Inhalt mit den in dem Informationsträger 10 gespeicherten Informationen verglichen werden und die passenden Zubereitungsparameter können aufgerufen werden.

In einem weiteren Ausführungsbeispiel, ist die Erkennungseinheit 12 mit dem Kommunikationsmodul 6 verbunden. Auf dieser Weise können Informationen aus dem Getränkeautomaten 2 entsprechend des erkannten Inhaltes des Messgefäßes 1 aufgerufen werden.

Fig. 1 zeigt das Messgefäß 1, wobei eine Anzeigeeinrichtung 16 vorgesehen ist und die Anzeigeeinrichtung 16 mit dem mindestens einen Informationsträger 10 und/oder dem mindestens einen Kommunikationsmodul 6 verbunden ist. Die Anzeigeeinrichtung 16 ermöglicht die Kommunikation mit dem Nutzer.

Eine Verbindung der Anzeigeeinrichtung 16 mit dem Informationsträger 10 ermöglicht die auf dem Informationsträger 10 gespeicherten Informationen anzuzeigen. Wenn das Waagemodul 4, die Identifizierungseinheit 8 und die Erkennungseinheit 12 auch mit dem Informationsträger 10 verbunden sind, kann dem Nutzer das Gewicht an Teeblättern angezeigt werden, die in dem Messgefäß 1 noch zuzufügen ist, wobei das zu messende Gewicht entsprechend der seiner Identität zugeordneten Informationen über Zubereitungsparameter vorgegeben wird.

Wenn die Anzeigeeinrichtung 16 mit dem Kommunikationsmodul 6 verbunden ist und das Kommunikationsmodul 6 für eine bidirektionale Kommunikation mit dem Getränkeautomaten 2 vorgesehen ist, können von dem Getränkeautomaten 2 gesendete Informationen angezeigt werden.

In Fig. 2 ist ein Messgefäß 1 gezeigt, wobei mindestens eine haptische Einrichtung 20 und/oder mindestens ein akustischer Signalgeber 22 vorgesehen ist und die mindestens eine haptische Einrichtung 20 und/oder der mindestens eine Signalgeber 22 mit dem mindestens einen Waagemodul 4 verbunden ist.

Dank der haptischen Einrichtung 20 und deren Verbindung mit dem Waagemodul 4, kann der Nutzer informiert werden, wenn das Gewicht des Inhaltes des Messgefäßes 1 ein vorgegebenes Gewicht überschreitet. Der akustische Signalgeber 22 kann auch diese Funktion erfüllen.

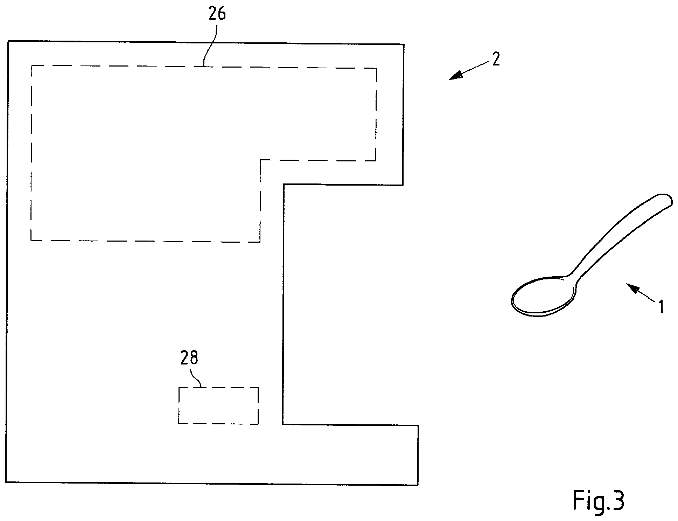

In Fig. 3 ist ein Getränkeautomat 2 mit mindestens einer Einrichtung 26 zur Zubereitung eines Getränks und mit mindestens einem Kommunikationsmodul 28 zur Verbindung mit mindestens einem Messgefäß 1 gezeigt, wobei das mindestens eine Kommunikationsmodul 28 für eine Verbindung mit dem mindestens einen Messgefäß 1 vorgesehen ist und die Einrichtung 26 abhängig von der mindestens einen über das mindestens eine Kommunikationsmodul 28 übertragenen Wägeinformation einstellbar ist.

Die Verbindung zwischen dem Getränkeautomaten 2 und dem Messgefäß 1 ist vorzugsweise kabellos, so dass die Anwendung der beiden Vorrichtungen vereinfacht ist und hygienische Benutzungsbedingungen eingehalten werden.

Weiterhin zeigt Fig. 3 einen Getränkeautomaten 2, wobei das mindesten eine Kommunikationsmodul 28 für eine bidirektionale Verbindung mit dem mindestens einen Messgefäß 1 vorgesehen ist. Dadurch können Informationen, insbesondere Wägeinformationen oder Informationen über Zubereitungsparameter sowohl von dem Getränkeautomaten 2 zu dem Messgefäß 1 als auch von dem Messgefäß 1 zu dem Getränkeautomaten 2 übertragen werden.

Die in Fig. 3 gezeigten Getränkeautomaten 2 und Messgefäß 1 werden in einem Verfahren zur Einstellung von Zubereitungsparametern eines Getränkeautomaten 2 in Abhängigkeit von erfassten Wägeinformationen angewendet, wobei die erfassten Wägeinformationen über eine Verbindung mit einem Messgefäß 1 übermittelt werden. In dieser Weise werden die Voraussetzungen für eine optimale Anwendung des Messgefäßes 1 und des Getränkeautomaten 2 geschaffen.

Bei dem Verfahren kann der Getränkeautomat 2 für das Zubereiten eines Getränks auf eine Flüssigkeitsmenge entsprechend der erfassten Wägeinformation und/oder einer Information über Zubereitungsparameter eingestellt werden. Dadurch kann die Wasser- oder Milchmenge an das von dem Waagemodul 4 gemessene Gewicht angepasst werden. Weiterhin kann die Flüssigkeitsmenge an die Vorlieben des Nutzers angepasst werden, wenn der Nutzer identifiziert wurde und die entsprechenden individualisierten Zubereitungsparameter vorhanden sind. Die individualisierten Zubereitungsparameter können in einer Datenbank in dem Getränkeautomaten 2 oder in dem Informationsträger 10 des Messgefäßes 1 gespeichert sein.

Der Getränkeautomat 2 und das Messgefäß 1 können in einem Verfahren gemeinsam eingesetzt werden, bei dem der Getränkeautomat 2 auf eine Temperatur und/oder eine Stärke entsprechend der erfassten Informationen eingestellt wird. Dadurch können die Nutzervorlieben oder -gewohnheiten bezüglich der Temperatur und der Stärke bei der Ausgabe berücksichtigt werden.

Bei dem Verfahren kann ein Nutzer mittels der Identifizierungseinheit 10 des Messgefäßes 1 identifiziert werden und anschließend kann der Getränkeautomat 2 auf eine Getränkesorte in Abhängigkeit eines zu dem identifizierten Nutzer zugeordneten Zubereitungsparameters eingestellt werden. Im Anschluss an die Identifizierung des Nutzers werden die für diesen Nutzer gespeicherten Informationen über Zubereitungsparameter einschließend einer Getränkesorte aus der Datenbank in dem Getränkeautomaten 2 oder in dem Messgefäß 1 aufgerufen und anschließend der Getränkeautomat 2 entsprechend der aufgerufenen Getränkesorte eingestellt.

Die Verbindung der Erkennungseinheit 12 mit dem Kommunikationsmodul 6 ermöglicht, dass die Wassertemperatur an die von der Erkennungseinheit 12 erkannte Teesorte angepasst wird. Dadurch ist die Zubereitung jeder Teesorte optimiert und kann zuverlässig wiederholt werden. Dies gilt auch für Kaffeebohnen oder andere Zutaten, die für die Zubereitung von Getränken oder Suppen nötig sind.

Vorzugsweise wird bei dem Verfahren mindestens eine Gewichtsinformation von dem Getränkeautomaten 2 zu dem Messgefäß 1 übertragen. In dieser Weise kann ein abzumessendes Gewicht vorgegeben werden. Wenn das Messgefäß 1 eine Anzeigeeinrichtung 16, eine haptische Einrichtung 20 und/oder einen akustischen Signalgeber 22 aufweist, kann dem Nutzer das abzumessende Gewicht vorgegeben werden.

In einem anderen Beispiel wird bei dem Verfahren mindestens eine Gewichtsinformation von dem Messgefäß 1 zu dem Getränkeautomaten 2 übertragen. Dadurch können Zubereitungsparameter wie Temperatur, Ziehzeit oder weiteres entsprechend des von dem Waagemodul 4 gemessenen Gewichts angepasst werden.

Wenn das Kommunikationsmodul 6 des Messgefäßes 1 und das Kommunikationsmodul 28 des Getränkeautomaten 2 für eine bidirektionale Kommunikation vorgesehen sind, kann mindestens eine Gewichtseingabe von dem Getränkeautomaten 2 zu dem Messgefäß 1 und von dem Messgefäß 1 zu dem Getränkeautomaten 2 übertragen werden. Dadurch kann sowohl ein Gewicht von dem Getränkeautomaten 2 zu dem Messgefäß 1 vorgegeben werden, als auch das von dem Waagemodul 4 erfasste Gewicht zu dem Getränkeautomaten 2 kommuniziert werden.

Dieses Verfahren ermöglicht die optimale Zubereitung von Getränken, wobei sowohl die Vorlieben des identifizierten Nutzers als auch die Eigenschaften der einzelnen Zutaten berücksichtigt werden.

## Patentansprüche

1. Messgefäß für einen Getränkeautomaten (2)
- mit einem Messvolumen (3) zur Aufnahme eines Messgutes und
- mit mindestens einem Waagemodul (4),
- wobei das Messgut als Zutat für die Zubereitung eines Getränks vorgesehen ist,
- wobei mindestens ein mit dem Waagemodul (4) verbundenes Kommunikationsmodul (6) zum Erfassen mindestens einer Wägeinformation vorgesehen ist und
- wobei das Kommunikationsmodul (6) für eine Übertragung der mindestens einen Wägeinformation an den Getränkeautomaten (2) ausgebildet ist,
**dadurch gekennzeichnet,**
- **dass** mindestens eine Identifizierungseinheit (8) für eine Identifizierung eines Nutzers des Messgefäßes vorgesehen ist.

2. Messgefäß nach Anspruch 1,
**dadurch gekennzeichnet,**
- **dass** das mindestens eine Kommunikationsmodul (6) eine bidirektionale Kommunikation mit dem Getränkeautomaten (2) ermöglicht.

3. Messgefäß nach Anspruch 1 oder 2,
**dadurch gekennzeichnet,**
- **dass** mindestens ein Informationsträger (10) vorgesehen ist und
- **dass** der mindestens eine Informationsträger (10) mindestens eine Wägeinformation und/oder eine Information über mindestens einen Zubereitungsparameter aufweist.

4. Messgefäß nach einem der Ansprüche 1 bis 3,
**dadurch gekennzeichnet,**
**dass** eine Erkennungseinheit (12) für ein Erkennen des Inhalts des Messvolumens vorgesehen ist.

5. Messgefäß nach einem der Ansprüche 1 bis 4,
**dadurch gekennzeichnet,**
- **dass** eine Anzeigeeinrichtung (16) vorgesehen ist und
- **dass** die Anzeigeeinrichtung (16) mit dem mindestens einen Informationsträger (10) und/oder dem mindestens einen Kommunikationsmodul (6) verbunden ist.

6. Messgefäß nach einem der Ansprüche 1 bis 5,
**dadurch gekennzeichnet,**
- **dass** mindestens eine haptische Einrichtung (20) und/oder mindestens ein akustischer Signalgeber (22) vorgesehen ist und
- **dass** die mindestens eine haptische Einrichtung (20) und/oder der mindestens eine Signalgeber (22) mit dem mindestens einen Waagemodul (4) verbunden ist.

7. Getränkeautomat
- mit mindestens einer Einrichtung (26) zur Zubereitung eines Getränks und
- mit mindestens einem Kommunikationsmodul (28) zur Verbindung mit mindestens einem Messgefäß (1) nach einem der Ansprüche 1 bis 6,
**dadurch gekennzeichnet,**
- **dass** das mindestens eine Kommunikationsmodul (28) für eine Verbindung mit dem mindestens einen Messgefäß (1) ausgebildet ist und
- **dass** die Einrichtung (26) abhängig von der mindestens einen über das mindestens eine Kommunikationsmodul (28) übertragenen Wägeinformation und einer Identität eines Nutzers einstellbar ist.

8. Getränkeautomat nach Anspruch 7,
**dadurch gekennzeichnet,**
**dass** das mindesten eine Kommunikationsmodul (28) für eine bidirektionale Verbindung mit dem mindestens einen Messgefäß (1) vorgesehen ist.

9. Verfahren zur Einstellung von Zubereitungsparametern eines Getränkeautomaten in Abhängigkeit von mindestens einer erfassten Wägeinformation,
wobei die mindestens eine Wägeinformation über eine Verbindung mit einem Messgefäß nach einem der Ansprüche 1 bis 6 übermittelt wird.

10. Verfahren nach Anspruch 9,
bei dem der Getränkeautomat für das Zubereiten eines Getränks auf eine Flüssigkeitsmenge entsprechend der mindestens einen Wägeinformation und/oder einer Information über mindestens einen Zubereitungsparameter eingestellt wird.

11. Verfahren nach Anspruch 9 oder 10,
bei dem der Getränkeautomat auf eine Temperatur und/oder eine Stärke entsprechend der mindestens einen Wägeinformation eingestellt wird.

12. Verfahren nach einem der Ansprüche 9 bis 11,
bei dem mindestens ein Nutzer mittels mindestens einer Identifizierungseinheit identifiziert wird und
bei dem der Getränkeautomat auf eine Getränkesorte in Abhängigkeit mindestens eines zu dem identifizierten Nutzer zugeordneten Zubereitungsparameters eingestellt wird.

13. Verfahren nach einem der Ansprüche 9 bis 12,
bei dem mindestens eine Gewichtsinformation von dem Getränkeautomaten zu dem Messgefäß übertragen wird.

14. Verfahren nach einem der Ansprüche 9 bis 13,
bei dem mindestens eine Gewichtsinformation von dem Messgefäß zu dem Getränkeautomaten übertragen wird.

## Claims

1. Measuring vessel for an automatic beverage machine (2)
- with a measuring volume (3) for receiving a material to be measured, and
- with at least one weighing module (4),
- wherein the material to be measured is provided as an ingredient for the preparation of a beverage,
- at least one communication module (6) connected to the weighing module (4) being provided for detecting at least one weighing information, and
- the communication module (6) being designed for transmitting the at least one weighing information to the automatic beverage machine (2),
**characterized**
- **in that** at least one identification unit (8) is provided for an identification of a user of the measuring vessel.

2. Measuring vessel according to claim 1,
**characterized**
- **in that** the at least one communication module (6) enables bidirectional communication with the automatic beverage machine (2).

3. Measuring vessel according to claim 1 or 2,
**characterized**
- **in that** at least one information carrier (10) is provided, and
- **in that** the at least one information carrier (10) has at least one weighing information and/or information about at least one preparation parameter.

4. Measuring vessel according to one of claims 1 to 3,
**characterized**
**in that** a recognition unit (12) is provided for recognizing the content of the measuring volume.

5. Measuring vessel according to one of claims 1 to 4,
**characterized**
- **in that** a display device (16) is provided, and
- **in that** the display device (16) is connected to the at least one information carrier (10) and/or the at least one communication module (6).

6. Measuring vessel in accordance with one of claims 1 to 5,
**characterized**
- **in that** at least one haptic device (20) and/or at least one acoustic signal transmitter (22) is provided and
- **in that** the at least one haptic device (20) and/or the at least one signal transmitter (22) is connected to the at least one weighing module (4).

7. Automatic beverage machine
- having at least one device (26) for preparing a beverage, and
- with at least one communication module (28) for connection to at least one measuring vessel (1) according to one of claims 1 to 6,
**characterized**
- **in that** the at least one communication module (28) is designed for connection to the at least one measuring vessel (1) and
- **in that** the device (26) can be set as a function of the at least one weighing information transmitted via the at least one communication module (28) and an identity of a user.

8. Automatic beverage machine according to claim 7,
**characterized**
**in that** the at least one communication module (28) is provided for a bidirectional connection to the at least one measuring vessel (1).

9. Method for setting the preparation parameters of an automatic beverage machine as a function of at least one sensed weighing information,
wherein the at least one weighing information is transmitted via a connection to a measuring vessel in accordance with one of claims 1 to 6.

10. Method according to claim 9,
in which the automatic beverage machine for preparing a beverage is set to a quantity of liquid corresponding to the at least one weighing information and/or information on at least one preparation parameter.

11. Method according to claim 9 or 10,
in which the automatic beverage machine is set to a temperature and/or strength corresponding to the at least one weighing information.

12. Method according to any of claims 9 to 11,
in which at least one user is identified by means of at least one identification unit, and in which the automatic beverage machine is set to a beverage type as a function of at least one preparation parameter assigned to the identified user.

13. Method according to any of claims 9 to 12,
in which at least one weight information is transferred from the automatic beverage machine to the measuring vessel.

14. Method according to any of claims 9 to 13,
in which at least one weight information is transferred from the measuring vessel to the automatic beverage machine.

## Revendications

1. Récipient de mesure pour un dispositif automatique de préparation de boissons (2)
- avec un volume de mesure (3) pour recevoir un matériau à mesurer, et
- avec au moins un module de pesage (4),
- où le matériau à mesurer est fourni en tant qu'ingrédient pour la préparation d'une boisson,
- où au moins un module de communication (6) relié au module de pesage (4) est prévu pour détecter au moins une information de pesage, et
- où le module de communication (6) est conçu pour transmettre l'au moins une information de pesage au dispositif automatique de préparation de boissons (2),
**caractérisé**
- **en ce qu'**au moins une unité d'identification (8) est prévue pour identifier un utilisateur du récipient de mesure.

2. Récipient de mesure selon la revendication 1,
**caractérisé**
- **en ce que** l'au moins un module de communication (6) permet une communication bidirectionnelle avec le dispositif automatique de préparation de boissons (2).

3. Récipient de mesure selon la revendication 1 ou 2,
**caractérisé**
- **en ce qu'**au moins un support d'information (10) est fourni, et
- **en ce que** l'au moins un support d'information (10) comporte au moins une information de pesage et/ou une information sur au moins un paramètre de préparation.

4. Récipient de mesure selon l'une des revendications 1 à 3,
**caractérisé**
**en ce qu'**une unité de reconnaissance (12) est prévue pour reconnaître le contenu du volume de mesure.

5. Récipient de mesure selon l'une des revendications 1 à 4,
**caractérisé**
- **en ce qu'**un dispositif d'affichage (16) est prévu, et
- **en ce que** le dispositif d'affichage (16) est relié à l'au moins un support d'information (10) et/ou à l'au moins un module de communication (6).

6. Récipient de mesure selon l'une des revendications 1 à 5,
**caractérisé**
- **en ce qu'**il est prévu au moins un dispositif haptique (20) et/ou au moins un émetteur de signal acoustique (22) et
- **en ce que** l'au moins un dispositif haptique (20) et/ou l'au moins un émetteur de signal (22) est relié à l'au moins un module de pesage (4).

7. Dispositif automatique de préparation de boissons
- avec au moins un dispositif (26) pour préparer une boisson, et
- avec au moins un module de communication (28) pour le raccordement à au moins un récipient de mesure (1) selon l'une des revendications 1 à 6,
**caractérisé**
- **en ce que** l'au moins un module de communication (28) est conçu pour être relié à l'au moins un récipient de mesure (1) et
- **en ce que** le dispositif (26) peut être réglé en fonction de l'au moins une information de pesage transmise via l'au moins un module de communication (28) et d'une identité d'un utilisateur.

8. Dispositif automatique de préparation de boissons selon la revendication 7,
**caractérisé**
**en ce que** l'au moins un module de communication (28) est prévu pour une connexion bidirectionnelle avec l'au moins un récipient de mesure (1).

9. Procédé pour régler les paramètres de préparation d'un dispositif automatique de préparation de boissons en fonction d'au moins une information de pesage détectée, où l'au moins une information de pesage est transmise par une liaison à un récipient de mesure selon l'une des revendications 1 à 6.

10. Procédé selon la revendication 9,
dans lequel le dispositif automatique de préparation de boissons est réglé, pour la préparation d'une boisson, sur une quantité de liquide correspondant à l'au moins une information de pesage et/ou à une information sur au moins un paramètre de préparation.

11. Procédé selon la revendication 9 ou 10,
dans lequel le dispositif automatique de préparation de boissons est réglé sur une température et/ou une puissance correspondant à l'au moins une information de pesage.

12. Procédé selon l'une des revendications 9 à 11,
dans lequel au moins un utilisateur est identifié au moyen d'au moins une unité d'identification, et
dans lequel le dispositif automatique de préparation de boissons est réglé sur un type de boisson en fonction d'au moins un paramètre de préparation affecté à l'utilisateur identifié.

13. Procédé selon l'une des revendications 9 à 12,
dans lequel au moins une information de poids est transférée du dispositif automatique de préparation de boissons au récipient de mesure.

14. Procédé selon l'une des revendications 9 à 13,
dans lequel au moins une information de poids est transférée du récipient de mesure au dispositif automatique de préparation de boissons.
